# EUROPEAN PATENT SPECIFICATION

(11) **EP 0 678 901 B1**
(45) Date of publication and mention of the grant of the patent: **07.01.1998**
(21) Application number: 95302443.7
(22) Date of filing: 12.04.1995
(51) Int. Cl.: H01K 1/34

(54) **Filament lamp**
Glühwendellampe
Lampe à filament

(30) Priority: 21.04.1994 US 230655
(43) Date of publication of application: 25.10.1995
(73) Proprietor: GENERAL ELECTRIC COMPANY, Schenectady, NY 12345 (US)
(72) Inventor: Olwert, Ronald James, Concord Township, Ohio 44077 (US); Page, Timothy D., Aurora, Ohio 44202 (US)
(74) Representative: Goode, Ian Roy

(56) References cited:
- EP-A- 0 562 871
- EP-A- 0 590 602
- WO-A-85/01833
- GB-A- 2 144 264
- US-A- 4 598 225
- PATENT ABSTRACTS OF JAPAN vol. 004 no. 052 (E-007) ,18 April 1980 & JP-A-55 024355 (MITSUBISHI ELECTRIC CORP) 21 February 1980,

## Description

### Background of the Invention

This invention pertains to the art of electrical lamps and more particularly to incandescent lamps. The invention is particularly applicable to an incandescent lamp using a filament that generates light in response to electrical current applied thereto within an enclosed, pressurized vitreous first envelope. The first envelope is contained within a second or outer envelope and the cavity defined between the envelopes filled with an inert gas. This arrangement allows the lamp to be used in a wide variety of applications since it eliminates the potential for electrical safety hazard, reduces the probability of a non-passive failure, and can be used in non-hermetically, sealed lamp products.

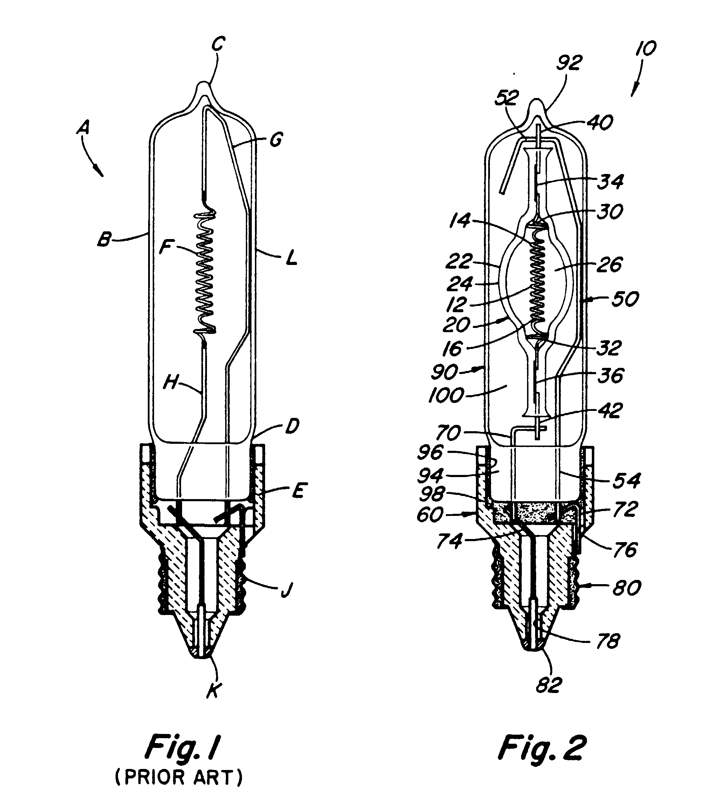

FIGURE 1 illustrates a quartz lamp **A** currently on the market. This lamp has a substantially cylindrical envelope or outer jacket B preferably formed from quartz or a similar vitreous material. A first or outer end **C** of the envelope is sealed and the second or inner end **D** is received in a lamp base **E.**

Centrally supported within the envelope is a light generating filament **F.** As apparent in FIGURE 1, the filament **F** is generally aligned with a longitudinal axis of the envelope and maintained in position by first and second support members **G, H.** The first support member **G** provides both mechanical support and electrical connection between a first end of the filament and a first electrical lead. The first lead terminates in an externally threaded shell **J** received over a portion of the base member. The second support member **H** likewise supports a second end of the filament. It is electrically connected via a second lead with a solder connection **K** at the end of a central passage that extends generally axially through the base member **E.** Thus, the solder connection and the shell establish electrical contact with a female socket that receives the lamp base therein.

These lamps may also employ an infrared coating represented by the letter L on the envelope B. The coating is intended to reflect a portion of the emitted light toward the filament and increase the efficacy of the lamp operation. Unfortunately, and as will become more apparent below, this lamp configuration is not ideal for achieving desired higher efficacies.

A filament lamp having a filament within a generally elliptically shaped chamber is described in EP-A-0,562,871. A double-bulb halogen lamp, in which an inner bulb containing a filament is supported within an outer bulb, is described in EP-A-0,590,602.

The high cost of energy, particularly in selected countries, requires that this type of lamp achieve significantly higher efficacies without any decrease in performance. For example, equivalent performance is desired and can be measured in lumen output and lamp life, while still meeting size requirements for lamps of this type. Accordingly, lower power consumption, high lumens, and extended lamp life ultimate goals in this particular application and substantial changes are required with known arrangements to achieve same. For example, currently manufactured versions as illustrated in FIGURE 1 operating at 110 volts have wattages of 65, 85, and 130 watts.

It is believed that modifying the infrared coating provided on the envelope with known coatings could result in an efficacy gain of between 2% and 4% over lamps with prior infrared coatings. However, significantly higher efficacies are still required.

### Summary of the Invention

The present invention contemplates a new and improved lamp that overcomes all of the above-referenced problems and others and provides decreased power consumption without adversely affecting lumen output, lamp life, or materially altering the size of the lamp.

A lamp according to the invention is defined in claim 1. Advantageous modifications of this lamp are defined in the dependent claims.

According to one aspect of the invention, the lamp is comprised of an inner envelope that contains a light generating filament within an elliptical portion of the inner envelope. A coating on the elliptical portion of the envelope reflects selected wavelengths of the generated light toward the filament. A substantially cylindrical outer envelope surrounds the inner envelope and defines a cavity there-between. The cavity is filled with an inert gas to limit oxidation of first and second leads extending from the filament through the inner envelope.

According to another aspect of the invention, the temperature of the inner envelope is regulated through the use of a desired fill gas and fill pressure within the cavity to achieve optimal performance with regard to lumen output and lamp life.

A principal advantage of the invention results from the significantly lower power consumption with this lamp construction with respect to known arrangements.

Another advantage resides in the maintenance of the lumen output, lamp life, and satisfying dimensional requirements relative to presently manufactured quartz lamps of this type.

Still other advantages and benefits of the invention will become apparent to those skilled in the art upon a reading and understanding of the following detailed description.

### Brief Description of the Drawings

The invention may take physical form in certain parts and arrangements of parts, a preferred embodiment of which will be described in detail in this specification and illustrated in the accompanying drawings which form a part hereof, and wherein:
FIGURE 1 is an elevational view of a prior art lamp with selected portions shown in cross-section;
FIGURE 2 is an elevational view of the subject new lamp with selected portions shown in cross-section in a manner similar to FIGURE 1;
FIGURE 3 is an elevational view of the support member used to mount the inner envelope in the outer envelope; and
FIGURE 4 is an elevational view illustrating how the hooked end of the support member guides and orients the inner envelope into the outer envelope in the subject new lamp.

### Detailed Description of the Preferred Embodiment

Referring now to the drawings wherein the showings are for the purposes of illustrating the preferred embodiment of the invention only and not for purposes of limiting same, FIGURES 2 - 4 show a modified filament lamp **10** having improved performance. Particularly, reduced power consumption is achieved without sacrificing lumen output, lamp life, or dimensional requirements in comparison with the prior art assembly of FIGURE 1. The lamp **10** includes a light generating member, preferably a filament **12**. In this embodiment, the filament is a coiled coil as commonly used in the industry. However, other filament configurations such as a single coil, triple coil, etc., may be used without departing from the scope and intent of the invention. First and second ends **14, 16** of the filament are generally aligned along an axis that closely coincides with a longitudinal axis of inner envelope **20**. The inner envelope is formed of a vitreous material, for example quartz, and is sealed at its opposite ends in a manner to be described in greater detail below.

The inner envelope **20** includes a central, substantially elliptical portion **22** in which the foci of the elliptical configuration are preferably located on the longitudinal axis that coincides with the filament axis. At least the outer surface of the elliptical portion includes a coating intended to reflect selected wavelengths of the generated light toward the filament. The coating is represented by numeral **24** in the drawings and it will be understood that it preferably comprises an infrared coating intended to permit other wavelengths of light to pass therethrough while reflecting the infrared portion of the emitted light spectrum toward the filament. The reflected infrared portion of the emitted light contributes to temperature elevation of the filament thereby resulting in increase efficiency of light emission since at least a portion of the reflected infrared radiation is converted to visible light radiation. The coating used on the Halogen-IR™ lamp available from General Electric Company is an example of one type of infrared reflective coating used in the industry. Preferably, the coating is comprised of multiple layers of refractory metal oxides having alternating high and low indexes of refraction.

Chamber **26** formed in the envelope and housing the filament is preferably filled with a pressurized noble gas, such as xenon, krypton, argon, or nitrogen may be added to suppress arcing in high voltage products in an amount of 5% to 10%. A reduced cold pressure on the order of 3.3·10⁵ Pa (2500 Torr) can be achieved and is significantly less than prior art cold pressures on the order of 5.3·10⁴ Pa (4000 Torr.)

The first end of the inner envelope has a reduced cross-section and is adapted to receive one end of a first inner lead **30**. Likewise, a second end of the inner envelope has a reduced cross-section and is adapted to receive an end of a second inner lead **32**. The inner leads are connected to the ends **14, 16,** respectively, of the filament, exit the chamber **26**, and are sealingly received within the reduced cross-sectional portions of the sealed quartz at opposite ends of the inner envelope. The leads are, in turn, electrically connected to thin metal foils, typically formed of molybdenum and which are commonly referred to as moly foils. Thus, a pair of moly foils **34, 36** are sealed in the reduced diameter ends of the inner envelope by any well known or conventional seal arrangement.

Extending generally axially outward from outer ends of the foils **34, 36** are first and second outer leads **40, 42,** respectively. Outer terminal ends of the first and second outer leads **40, 42** protrude from the quartz inner envelope and are connected to support members in a manner to be described in greater detail below.

The first outer lead **40** extends from the inner envelope and is connected to a first support member or wire **50**, particularly along a first end **52** of the support member. Any suitable mechanical interconnection between the first support member and the first outer lead **40** can be used. A second end **54** of the first support member is embedded or otherwise secured to lamp base **60**. Preferably the lamp base is a ceramic material, although other materials can be used without departing from the scope and content of the subject invention.

A second support member **70** interconnects the second outer lead **42** with the lamp base **60**. It, too, is preferably embedded into the base to provide an electrically insulated, stable support for the inner envelope.

First and second lead wires **72, 74** are connected to the bases of the first and second support members **50**, **70**, respectively. A first lead wire extends through an axially directed opening in the base. The opening is radially spaced from the longitudinal axis of the filament and the lamp. The first lead wire proceeds through the opening and is connected with an externally threaded shell **80** received around the base. The second lead wire **74** proceeds generally axially along the longitudinal axis, exiting the base through central opening **78**. A solder connection represented by numeral **82** is applied to the terminal end of the second lead wire so that the soldered end is axially and radially spaced from the shell **80**. The axial and radial spacing between the shell **80** and the solder connection **82** cooperates with suitable contacts in a lamp receiving socket (not shown) to provide electrical current to the filament through the lead wires, support members, outer leads, moly foils, and inner leads.

A second or outer envelope **90** has a first or closed end **92** and a second end **94** received in a recess **96** of the base. A cementitious material **98** secures the second end **94** of the outer envelope in the base and rigidly supports the outer envelope relative to the base. Thus, the support members are secured in a reduced cross-section of the outer envelope where the support members extend outwardly from the outer envelope. The support members are further secured by the cement **98** in the base.

The outer envelope is spaced along its length from the inner envelope **20** to define a sealed cavity **100.** The cavity is preferably filled with an inert gas to prevent oxidation of the outer lead. If oxidation of the outer leads takes place, the seal between the outer leads and the inner envelope is potentially breached as a wedging action can occur as a result of the oxidation. The inert gas can also be advantageously maintained at a relatively low pressure of approximately 5.3·10⁴ Pa (400 Torr). This low pressure provides a number of benefits. In addition to preventing oxidation of the outer leads, the use of a fill gas with varying degrees of thermal conductivity modifies the inner envelope wall temperature to achieve optimal performance with regard to lumen maintenance and lamp life. Additionally, the reduced pressure in the inner envelope reduces the probability of a non-passive failure. Moreover, the use of a sealed outer envelope formed from an alumina silicate glass reduces the amount of ultraviolet light (wavelengths in the range of 200-400 nanometers) radiated from the lamp. It also allows the lamp to be used in a non-hermetic outer jacket. That is, prior lamp arrangements operating at comparable temperatures (400°-500°C)require a hermetically sealed outer jacket or housing because of the concern with oxidation of the outer leads that results in eventual leakage at the seal interface and reduced lamp life. By providing the outer envelope over the inner envelope, the subject new lamp can be used in non-hermetically sealed outer jacket products. The outer envelope also eliminates potential problems with an exposed electrical lead wire. As is apparent from a review of FIGURE 2, all of the lead wires are contained within the outer envelope.

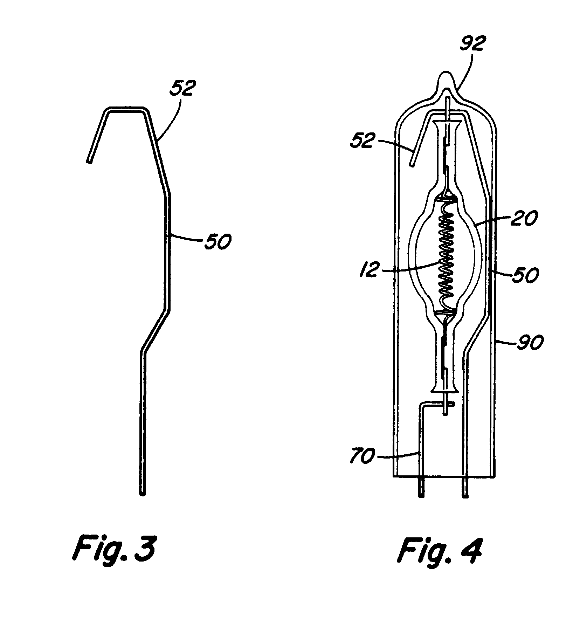

With continued reference to FIGURE 2, and additional reference to FIGURES 3 and 4, the support members are illustrated in greater detail. As originally manufactured, a continuous wire member is provided having a generally hooked or U-shaped configuration **52** at a first end. The hooked configuration facilitates guiding and centering of the support member, and likewise the inner envelope, upon insertion into the outer envelope as shown in FIGURE 4.

Expected results with the new lamp as shown and described with reference to FIGURES 2-4 are to reduce the power consumption from sixty-five to fifty watts, eighty-five to sixty-five watts, and one hundred thirty to ninety watts. This achieves a wattage reduction on the order of 23% to 31% over presently manufactured lamps of this type.

The invention has been described with reference to the preferred embodiment. Obviously, modifications and alterations will occur to others upon a reading and understanding of this specification. It is intended to include all such modifications and alterations insofar as they come within the scope of the appended claims.

## Claims

1. A lamp (10) comprising:
a light transmissive, inner elongated envelope (20) having a generally elliptical portion (22);
an elongated light generating filament (12) disposed in the elliptical portion (22);
first and second inner leads (30,32) connecting first and second ends (14,16) of the filament, respectively, to first and second outer leads (40,42) respectively which have terminal ends extending from the inner envelope;
an infrared coating (24) disposed on the elliptical portion (22) of the envelope for reflecting selected wavelengths of the generated light toward the filament;
a substantially cylindrical outer envelope (90) disposed about the inner envelope and defining a cavity (100) therebetween;
an inert fill gas received in the cavity for limiting oxidation of the first and second outer leads (40,42); and
first and second support members (50,70) connected to the terminal ends of the first and second outer leads, respectively, and orienting the inner envelope (20) within the outer envelope (90).

2. The lamp as defined in claim 1 wherein the filament (12) is a coiled coil.

3. The lamp as defined in claim 1 or 2 wherein the filament is substantially aligned with longitudinal axes of the inner and outer envelope.

4. The lamp as defined in claim 1, 2 or 3, further comprising first and second thin metal foils (34,36) sealed in ends of the inner envelope, the metal foils interconnecting the first and second inner leads (30,32) to the first and second outer leads (40,42), respectively.

5. The lamp as defined in claim 1, 2, 3 or 4, wherein the infrared coating (24) has layers of refractory metal oxides having alternating high and low indexes of refraction.

6. The lamp as defined in any preceding claim, wherein the inner envelope (20) includes a reduced pressure fill.

7. The lamp as defined in claim 6 wherein the inner envelope fill is pressurized to approximately 3.3·10⁵ Pa (2500 Torr).

8. The lamp as defined in any preceding claim, wherein the fill gas in the cavity is pressurized to approximately 5.3·10⁴ Pa (400 Torr).

9. The lamp as defined in any preceding claim, wherein the first support member (50) includes a generally hook-shaped end (52) facilitating assembly and location of the inner envelope within the outer envelope.

## Patentansprüche

1. Lampe (10), umfassend:
einen lichtdurchlässigen, langgestreckten Innenkolben (20), der einen allgemein elliptischen Abschnitt (22) aufweist;
einen langgestreckten, Licht erzeugenden Glühfaden (12), der innerhalb des elliptischen Abschnittes (22) angeordnet ist;
erste und zweite innere Zuleitungen (30,32), die erste und zweite Enden (14,16) des Glühfadens mit ersten und zweiten äußeren Zuleitungen (40,42) verbinden, deren Enden sich aus dem Innenkolben heraus erstrecken;
einen IR-Überzug (24), der auf dem elliptischen Abschnitt (22) des Kolbens angeordnet ist, um ausgewählte Wellenlängen des erzeugten Lichtes zum Glühfaden hin zu reflektieren;
einen im wesentlichen zylindrischen Außenkolben (90), der um den Innenkolben herum angeordnet ist und einen Hohlraum (100) dazwischen bildet;
ein inertes Füllgas in diesem Hohlraum zum Begrenzen der Oxidation der ersten und zweiten äußeren Zuleitungen (40,42) und
erste und zweite Trägerteile (50,70), die mit den Enden der ersten und zweiten äußeren Zuleitungen verbunden sind und den Innenkolben (20) innerhalb des Außenkolbens (90) orientieren.

2. Lampe nach Anspruch 1, worin der Glühfaden (12) eine Doppelwendel ist.

3. Lampe nach Anspruch 1 oder 2, worin der Glühfaden im wesentlichen mit den Längsachsen des Innen- und Außenkolbens ausgerichtet ist.

4. Lampe nach Anspruch 1, 2 oder 3, weiter umfassend erste und zweite dünne Metallfolien (34,36), die in den Enden des Innenkolbens abgedichtet sind, wobei die Metallfolien die ersten und zweiten inneren Zuleitungen (30,32) mit den ersten und zweiten äußeren Zuleitungen (40,42) verbinden.

5. Lampe nach Anspruch 1, 2, 3 oder 4, worin der IR-Überzug (24) Schichten aus hochschmelzenden Metalloxiden mit abwechselndem hohen und geringen Brechungsindex aufweist.

6. Lampe nach einem vorhergehenden Anspruch, worin der Innenkolben 20 eine Füllung verringerten Druckes einschließt.

7. Lampe nach Anspruch 6, worin die Füllung des Innenkolbens unter einen Druck von etwa 3,3 x 10⁵ Pa (2.500 Torr) gesetzt ist.

8. Lampe nach einem vorhergehenden Anspruch, worin die Gasfüllung in dem Hohlraum unter einen Druck von etwa 5,3 x 10⁴ Pa (400 Torr) gesetzt ist.

9. Lampe nach einem vorhergehenden Anspruch, worin das erste Trägerteil (50) ein allgemein hakenförmiges Ende (52) einschließt, das den Zusammenbau und die Anordnung des Innenkolbens innerhalb des Außenkolbens erleichtert.

## Revendications

1. Lampe (10) comprenant:
une enveloppe intérieure (20) de forme allongée, transmettant la lumière et comprenant une partie (22) elliptique d'une façon générale;
un filament (12) de forme allongée, générant de la lumière et disposé dans la partie elliptique (22);
des premier et deuxième conducteurs intérieurs (30, 32) raccordant les première et deuxième extrémités (14, 16) du filament, respectivement, aux premier et deuxième conducteurs extérieurs (40, 42) qui comportent, respectivement, des extrémités formant bornes, s'étendant depuis l'enveloppe intérieure;
un revêtement (24) pour infrarouges, disposé sur la partie elliptique (22) de l'enveloppe pour réfléchir vers le filament des longueurs d'onde sélectionnées de la lumière générée;
une enveloppe extérieure (90) sensiblement cylindrique disposée autour de l'enveloppe intérieure et définissant une cavité (100) entre ces enveloppes;
un gaz inerte de remplissage logé dans la cavité pour limiter l'oxydation des premier et deuxième conducteurs extérieurs (40; 42); et
des premier et deuxième éléments de support (50, 70) connectés, respectivement, aux extrémités formant bornes des premier et deuxième conducteurs extérieurs et orientant l'enveloppe intérieure (20) dans l'enveloppe extérieure (90).

2. Lampe selon la revendication 1, dans laquelle le filament (12) est un enroulement hélicoïdal.

3. Lampe selon la revendication 1 ou 2, dans laquelle le filament est sensiblement aligné avec les axes longitudinaux des enveloppes intérieure et extérieure.

4. Lampe selon la revendication 1, 2 ou 3, comprenant, en outre, des première et deuxième pellicules métalliques (34, 36) rendues étanches aux extrémités de l'enveloppe intérieure, ces pellicules métalliques reliant mutuellement les premier et deuxième conducteurs intérieurs (30, 32) aux premier et deuxième conducteurs extérieurs (40, 42), respectivement.

5. Lampe selon la revendication 1, 2, 3 ou 4, dans laquelle le revêtement (24) pour infrarouges comporte des couches d'oxydes métalliques réfractaires présentant, de façon altrnée, des indices de réfraction, élevé et faible.

6. Lampe selon l'une quelconque des revendications précédentes, dans laquelle l'enveloppe intérieure (20) comprend un gaz de remplissage sous pression réduite.

7. Lampe selon la revendication 6, dans laquelle le gaz de remplissage se trouvant dans l'enveloppe intérieure est mis sous une pression d'environ 3,3 . 10⁵ Pa (2500 Torr).

8. Lampe selon l'une quelconque des revendications précédentes, dans laquelle le gaz de remplissage se trouvant dans la cavité est mis sous une pression d'environ 5,3 . 10⁴Pa (400 Torr).

9. Lampe selon l'une quelconque des revendications précédentes, dans laquelle le premier élément de support (50) comprend une extrémité (52), en forme de crochet d'une façon générale, facilitant l'assemblage et le positionnement de l'enveloppe intérieure dans l'enveloppe extérieure.
